# EUROPEAN PATENT APPLICATION

(11) **EP 4 644 955 A1**
(43) Date of publication of application: **05.11.2025**
(21) Application number: 25169440.2
(22) Date of filing: 09.04.2025
(51) Int. Cl.: G01V 3/15, G06F 3/0362

(54) **3D UNDERGROUND SCANNING DETECTOR DEVELOPED WITH MAGNETIC KNOB**

(30) Priority: 01.05.2024 TR 202405226
(71) Applicant: Conrad Muhendislik Sanayi Ve Ticaret Limited Sirketi, 34841 Istanbul (TR)
(72) Inventor: GOKALP, Erol, Istanbul (TR)
(74) Representative: Yamankaradeniz, Kemal

(57) **Abstract**

The invention is a 3D underground scanning detector; having an innovative structure that allows the user to navigate the menu via the magnetic knob, make mode changes or selections, and display the scanning results as three-dimensional graphics on a screen integrated directly into the magnetic knob.

## Description

### Definition and Relevant Technical Field

The invention is a 3D underground scanning detector; having an innovative structure that allows the user to navigate the menu via the magnetic knob, make mode changes or selections, and display the scanning results as three-dimensional graphics on a screen integrated directly into the magnetic knob.

Three-dimensional underground search devices are underground imaging devices that detect differences under the ground and enable three-dimensional analysis. They enable the detection, measurement and location of buried metals, magnetic objects, and void structures such as graves, rooms and tunnels. Thanks to the three-dimensional (3D) analysis software specially prepared for the devices, magnetic (iron or steel) and nonmagnetic (gold, silver or copper) metals can be displayed graphically.

Three-dimensional underground scanning devices are used in geophysical measurements, archaeological excavations, various branches of the construction industry, infrastructure work in cities, soil structure examinations in agricultural lands, military mine, tunnel and secret passage searches, and underwater lost metallic object searches.

### State of Art

In the currently used three-dimensional underground scanning devices, an additional device and connection are usually required for the analysis of the detected data. This makes it difficult to scan quickly and effectively in the field.

Another disadvantage in the present devices is that multiple buttons and/or complex interfaces are required for menu navigation and mode changes. Especially when gloves are worn in adverse weather conditions, the user's mobility is restricted and use becomes quite difficult.

### Purpose of the Invention

In order to find solutions to the above mentioned problems, a 3D underground scanning detector developed with the magnetic knob, which is the subject of the invention, has been developed.

The purpose of the invention is to obtain a 3D underground scanning detector developed with an easy-to-use magnetic knob that can respond quickly to all types of field conditions by using a magnetic knob and performing menu navigation and mode changes from a single control point.

Another purpose of the invention is to obtain a 3D underground scanning detector developed with a magnetic knob comprising a screen integrated into the magnetic knob positioned on the detector control unit, in order to enable the device to be used independently and to display the scanning results in three dimensions directly on the device.

### Brief Description of Figures

The 3D underground scanning detector developed with a magnetic knob, which was developed to achieve the object of the invention, is described in detail with the following figures:

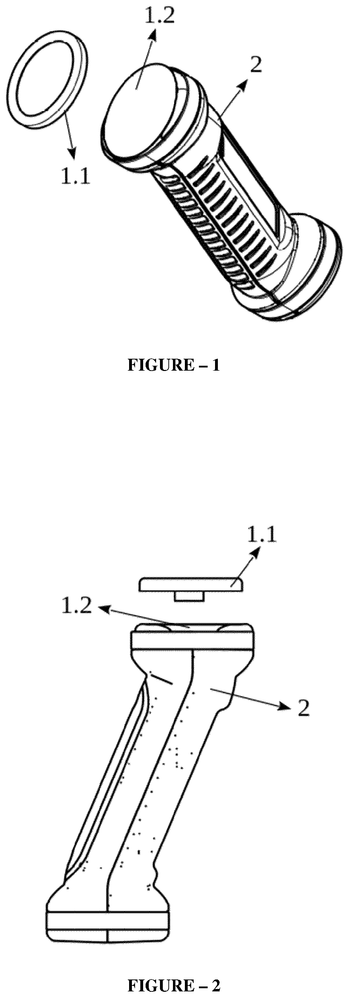

- **Figure 1**: is an exploded view illustrating the integration of the magnetic knob and the detector control unit.
- **Figure 2**: is a side section view illustrating the integration of the magnetic knob and the detector control unit.

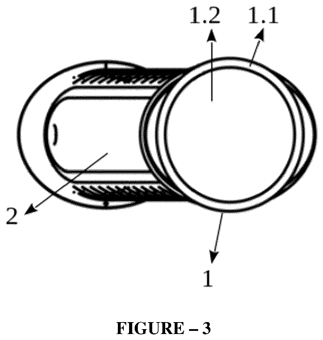

- **Figure 3**: is a top view of the detector control unit with integrated magnetic knob.

### Description of Reference Numbers

In addition, the figures are divided into parts/sections and detailed with reference numbers:
1. Magnetic knob
   1.1.Ring,
   1.2.TFT screen,
2. Detector Control Unit.

### Detailed Description of the Invention

The 3D underground scanning detector developed with the magnetic knob, which is the subject of the invention, is exemplified in the figures.

Based on the figures and the reference numbers forming the figures, the 3D underground scanning detector developed with a magnetic knob has a structure comprising a magnetic knob (1) consisting of a ring (1.1) and a TFT screen (1.2) and a detector control unit (2) on which the magnetic knob (1) is positioned.

The invention has an innovative structure that allows the user to navigate the menu, change or select a mode via the magnetic knob (1) and display the scanning results as three-dimensional graphics directly on an integrated TFT display (1.2) part of the magnetic knob (1).

The magnetic knob (1) consists of an outer ring (1.1) and a TFT screen (1.2) positioned inside the ring (1.1). The ring (1.1) is not in fixed structure. The software application menu used in the device is designed to be movable in order to enable navigation and/or selection between sections. Then, the magnetic knob (1) is integrated into the detector control unit (2).

The user can select a mode by rotating the ring (1.1) and navigating through the software application menu and can view the scanning results or the analysis of the data obtained based on the scanning results on the TFT screen (1.2) located inside the ring (1.1).

## Claims

1. A 3D underground scanning detector developed with a magnetic knob having a structure that allows navigation in the software application menu, mode change or selection, and display of scanning results directly on the device without the need for an external element, and **characterized by** comprising:
i. a magnetic knob (1) consisting of a movable ring (1.1) that allows navigation and/or selection between sections in the software application menu and a TFT screen (1.2) positioned inside the ring (1.1) to display the scan results, or the analysis of the data obtained depending on the scan results,
ii. a detector control unit (2) in which the magnetic knob (1) is integrated.
